# EUROPÄISCHE PATENTANMELDUNG

(11) **EP 1 992 839 A2**
(43) Veröffentlichungstag der Anmeldung: **19.11.2008**
(21) Anmeldenummer: 08103679.0
(22) Anmeldetag: 23.04.2008
(51) Int. Cl.: F16G 13/16

(54) **Energieführungskette**

(30) Priorität: 07.05.2007 DE 202007006667 U
(71) Anmelder: Murrplastik Systemtechnik GmbH, 71570 Oppenweiler (DE)
(72) Erfinder: Jostmeier, Helmut, 71540, Murrhardt (DE)
(74) Vertreter: Reule, Hanspeter

(57) **Zusammenfassung**

Die Erfindung betrifft eine Energieführungskette (10) mit einem Leitungskanal, in dem Versorgungsleitungen von ihrem ersten Ende (14) zu ihrem zweiten Ende geführt sind. Erfindungsgemäß ist am ersten Ende (14) ein Abschlussrahmen (16) vorgesehen, in welchem eine Anzahl von Anschlussmitteln (18) der Vorsorgungsleitungen in vorgegebener geometrischer Anordnung aufgenommen sind.

## Beschreibung

Die Erfindung betrifft eine Energieführungskette mit einem Leitungskanal, in dem Versorgungsleitungen von ihrem ersten zu ihrem zweiten Ende geführt sind.

Energieführungsketten dieser Art dienen dazu, bewegliche Maschinen oder Maschinenteile mit Strom, Druckluft, Wasser und dergleichen zu versorgen. Dabei sind die Versorgungsleitungen im Leitungskanal aufgenommen und dadurch gegen äußere Einflüsse geschützt. Am ersten Ende der Energieführungskette sind die Versorgungsleitungen zu einer Versorgungseinrichtung geführt, wie beispielsweise zu einem Schaltschrank. Am zweiten Ende sind sie zu der zu versorgenden Maschine geführt. Dabei ist es üblich, die Versorgungsleitungen an ihren Enden mit Steckverbindern zu versehen, um bei Defekten einzelne Leitungen austauschen zu können. Hierzu muß die betreffende Leitung aus der Energieführungskette entfernt und durch eine neue Leitung ersetzt werden. Letzteres ist aufwendig und oft vor Ort, beispielsweise durch Platzmangel, schwer realisierbar.

Es ist daher Aufgabe der Erfindung, eine Energieführungskette der eingangs genannten Art derart weiterzubilden, dass ein Defekt einer Versorgungsleitung einfacher behoben werden kann.

Die Aufgabe wird erfindungsgemäß durch eine Energieführungskette mit den Merkmalen des Anspruchs 1 gelöst. Vorteilhafte Weiterbildungen sind Gegenstand der abhängigen Ansprüche.

Der Erfindung liegt der Gedanke zugrunde, dass bei einem Defekt einer der Versorgungsleitungen mit einfachen Handgriffen die gesamte Energieführungskette abmontiert und gegen eine neue Energieführungskette ausgetauscht werden kann. Die Energieführungskette mit der defekten Versorgungsleitung kann dann in eine Werkstatt gebracht werden, wo sie unter wesentlich günstigeren Bedingungen repariert werden kann. Dabei ist es besonders vorteilhaft, wenn die Energieführungskette auch an ihrem zweiten Ende einen Abschlussrahmen mit in ihm aufgenommenen Anschlussmitteln der Versorgungsleitungen aufweist, der zweckmäßig die gleichen Merkmale wie der Abschlussrahmen am ersten Ende aufweist. Durch die Möglichkeit, die gesamte Energieführungskette mittels einfacher Handgriffe durch eine neue Energieführungskette zu ersetzen, können die Stillstandszeiten der betreffenden Maschine reduziert werden. Durch die Bevorratung von Ersatzketten kann auch die kostenintensive vorbeugende Wartung der Anlage zumindest teilweise entfallen. Desweiteren wird durch die vorgegebene geometrische Anordnung der Anschlussmittel im Abschlussrahmen eine Verbindung mit den falschen Gegenstücken am Schaltschrank oder an der Maschine vermieden. Die im Abschlussrahmen aufgenommenen Anschlussmittel, wie Stecker, werden mit einem Handgriff alle zugleich mit den Gegenstücken am Schaltschrank verbunden.

Zweckmäßig ist der Abschlussrahmen in das erste Ende formschlüssig eingesetzt. Dadurch wird zusätzlich eine Abdichtung des ersten Endes der Energieführungskette erzielt. Es wird bevorzugt, dass die Anschlussmittel lösbar im Abschlussrahmen befestigt sind, so dass die Leitungen auf einfache Weise aus der Energieführungskette entnommen und ausgetauscht werden können. Um auch eine gute Abdichtung des ersten Endes zu erzielen, wenn die Energieführungskette nicht vollständig mit Versorgungsleitungen bestückt ist, kann im Abschlussrahmen mindestens ein Blindflansch lösbar befestigt sein. Als Anschlussmittel werden Stecker bevorzugt, wie sie von der Firma Harting produziert werden und allgemein als "Harting-Stecker" bekanntgeworden sind. Im Inneren der Energieführungskette kann nahe dem Abschlussrahmen im Leitungskanal eine Einrichtung zur Zugentlastung der Versorgungsleitungen angeordnet sein, die insbesondere eine Belastung der Versorgungsleitungen beim Austausch der Energieführungskette reduziert.

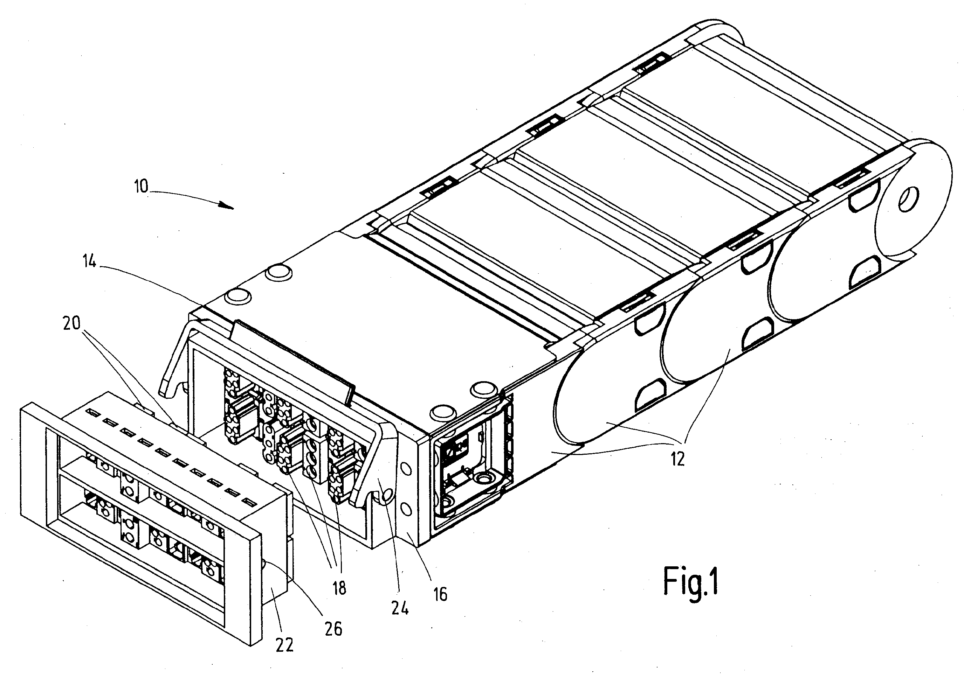

Im Folgenden wird die Erfindung anhand eines in der Zeichnung schematisch dargestellten Ausführungsbeispiels näher erläutert. Es zeigt
- Fig. 1: einen Endabschnitt einer Energieführungskette.

Eine Energieführungskette 10 gemäß Fig. 1 weist eine Anzahl von gelenkig miteinander verbundenen Kettengliedern 12 auf. Diese umschließen einen Leitungskanal, in dem mehrere elektrische Kabel aufgenommen sind, um eine bewegliche Maschine an eine Stromversorgung, im vorliegenden Fall einen Schaltschrank, anzuschließen. In das Kettenglied 12 am ersten Ende 14 der Energieführungskette 10 ist ein Abschlussrahmen 16 formschlüssig eingesetzt, in den eine Anzahl von an den Enden der Kabel angebrachten Steckern 18 eingesetzt sind. Die geometrische Anordnung der Stecker 18 im Abschlussrahmen 16 wird dabei durch die Anordnung der Gegenstücke 20 in einer Steckeranordnung 22 des Schaltschranks vorgegeben. Ist die Energieführungskette 10 nicht vollständig mit Kabeln bestückt, wird die leerbleibende Stelle im Abschlussrahmen 16 mittels eines Blindflanschs verschlossen.

Die gezeigte Energieführungskette 10 kann besonders einfach mit der Steckeranordnung 22 am Schaltschrank verbunden werden. Hierzu wird sie auf diese aufgesteckt, und ein Verbindungsbügel 24 am Abschlussrahmen 16 wird verschwenkt, bis er aus der Steckeranordnung 22 hervorstehende Nocken 26 hintergreift. Dadurch werden alle Kabel durch einen einzigen Arbeitsschritt am Schaltschrank angeschlossen. Das Kettenglied am zweiten Ende der Energieführungskette 10 kann ebenso mit einem Abschlussrahmen versehen sein, der gleich ausgebildet ist wie der Abschlussrahmen 16. Dadurch wird auch das Anschließen der Kabel an die mit Strom zu versorgende Maschine erleichtert.

### Zusammenfassend ist folgendes festzuhalten:

Die Erfindung betrifft eine Energieführungskette 10 mit einem Leitungskanal, in dem Versorgungsleitungen von ihrem ersten Ende 14 zu ihrem zweiten Ende geführt sind. Erfindungsgemäß ist am ersten Ende 14 ein Abschlussrahmen 16 vorgesehen, in welchem eine Anzahl von Anschlussmitteln 18 der Vorsorgungsleitungen in vorgegebener geometrischer Anordnung aufgenommen sind.

## Patentansprüche

1. Energieführungskette mit einem Leitungskanal, in dem Versorgungsleitungen von ihrem ersten zu ihrem zweiten Ende geführt sind, **gekennzeichnet durch** einen Abschlussrahmen (16) am ersten Ende (14), in welchem eine Anzahl von Anschlussmitteln (18) der Versorgungsleitungen in vorgegebener geometrischer Anordnung aufgenommen sind.

2. Energieführungskette nach Anspruch 1, **dadurch gekennzeichnet, dass** der Abschlussrahmen (16) formschlüssig in das erste Ende (14) eingesetzt ist.

3. Energieführungskette nach Anspruch 1 oder 2, **dadurch gekennzeichnet, dass** die Anschlussmittel (18) lösbar im Abschlussrahmen (16) befestigt sind.

4. Energieführungskette nach einem der vorangehenden Ansprüche, **dadurch gekennzeichnet, dass** im Abschlussrahmen (16) mindestens ein Blindflansch lösbar befestigt ist.

5. Energieführungskette nach einem der vorangehenden Ansprüche, **dadurch gekennzeichnet, dass** zumindest ein Teil der Anschlussmittel elektrische Stecker (18), insbesondere Harting-Stecker, sind.

6. Energieführungskette nach einem der vorangehenden Ansprüche, **gekennzeichnet durch** eine Einrichtung zur Zugentlastung der Versorgungsleitungen, die nahe dem Abschlussrahmen (16) im Leitungskanal angeordnet ist.

7. Energieführungskette nach einem der vorangehenden Ansprüche, **dadurch gekennzeichnet, dass** der Abschlussrahmen (16) ein Verbindungselement (24) zum Fixieren des ersten Endes (14) an einer Gegenstücke zum Anschließen der Anschlussmittel (18) aufweisenden Anschlusseinrichtung (22) aufweist.

8. Energieführungskette nach einem der vorangehenden Ansprüche, **gekennzeichnet durch** einen weiteren Abschlussrahmen am zweiten Ende, in welchem eine weitere Anzahl von Anschlussmitteln der Versorgungsleitungen in vorgegebener geometrischer Anordnung aufgenommen sind.
